(19) Europäisches Patentamt / European Patent Office / Office européen des brevets

(11) **EP 2 652 540 B1**

(12) **EUROPÄISCHE PATENTSCHRIFT**

(45) Veröffentlichungstag und Bekanntmachung des Hinweises auf die Patenterteilung:
**21.01.2015 Patentblatt 2015/04**

(21) Anmeldenummer: **11810819.0**

(22) Anmeldetag: **16.12.2011**

(51) Int Cl.:
***G02B 27/00*** (2006.01)

(86) Internationale Anmeldenummer:
**PCT/EP2011/073113**

(87) Internationale Veröffentlichungsnummer:
**WO 2012/080495 (21.06.2012 Gazette 2012/25)**

(54) **APOCHROMAT UND VERFAHREN ZUM ENTWURF EINES APOCHROMATEN**

APOCHROMAT AND METHOD FOR DESIGNING AN APOCHROMAT

OBJECTIF APOCHROMATIQUE ET PROCÉDÉ POUR METTRE AU POINT UN OBJECTIF APOCHROMATIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.12.2010 DE 102010054764**

(43) Veröffentlichungstag der Anmeldung:
**23.10.2013 Patentblatt 2013/43**

(73) Patentinhaber: **Deutsches Elektronen-Synchrotron DESY
22607 Hamburg (DE)**

(72) Erfinder: **SCHRÖDER, Hans-Christian
21256 Handeloh (DE)**

(74) Vertreter: **UEXKÜLL & STOLBERG
Patentanwälte
Beselerstrasse 4
22607 Hamburg (DE)**

(56) Entgegenhaltungen:
DE-A1- 3 622 125    DE-A1- 4 310 660
US-A1- 2004 145 706    US-A1- 2007 013 880

EP 2 652 540 B1

**Beschreibung**

Die Erfindung betrifft einen Apochromaten mit einer Mehrzahl von aufeinanderfolgenden Linsen, wobei jedes Paar aufeinanderfolgender Linsen eine sammelnde und eine zerstreuende Linse umfasst und durch ein dazwischen befindliches Fügemedium gekoppelt ist, und ein Verfahren zum Entwurf eines solchen Apochromaten.

Als Apochromate werden optische Systeme, zum Beispiel Objektive bezeichnet, bei denen der Farbfehler weitestgehend beseitigt ist. In der ursprünglichen Bedeutung ist ein apochromatisches Linsensystem so berechnet, dass die Schnittweite für drei Wellenlängen im sichtbaren Bereich übereinstimmt und zusätzlich die sphärische Aberration auch für die Nebenfarben korrigiert ist, während beim einfacheren Achromaten die Übereinstimmung für nur zwei Wellenlängen gefordert ist und die sphärische Aberration in der Regel nur für die Hauptfarbe korrigiert ist. Auch für die übrigen Wellenlängen ergibt sich beim Apochromaten dann nur eine sehr kleine Abweichung der Schnittweite, womit der Farblängsfehler gut korrigiert ist.

Beim Durchlauf durch eine Linse werden Lichtstrahlen abhängig von ihrer Wellenlänge unterschiedlich stark von der Linse gebrochen (Dispersion) und treffen somit nicht genau auf denselben Punkt der Bildebene auf. Dadurch entstehen Unschärfen und Farbsäume (sekundäres Spektrum, chromatische Aberration). Bei echten Apochromaten kann durch Gestaltung von aufeinanderfolgenden zerstreuenden und sammelnden Linsen durch die Art des Linsenmaterials und die geometrische Beschaffenheit der Linsen (Krümmungsradien) auch das sekundäre Spektrum beseitigt werden.

Bekannte technische Lösungen für Fernrohr-, Kollimator- oder Messapochromaten bestehen in der Regel aus zwei bis drei Linsen, die sich wie folgt gliedern:

I. dreilinsige Kristall- oder Sonderglasapochromate ohne Luftspalt.

II. zwei- oder dreilinsige Glasapochromate (Kurzflintglas, Schwerflintglas) mit oder ohne Luftspalt,

III. zwei-, drei- oder vierlinsige Sonderglasapochromate mit einem, zwei oder gar drei Luftspalten.

Allen bisherigen Systemen ist gemein, das korrekturbedingte ungünstige Brechkraftverteilungen zu Dezentrierungs- und Kippempfindlichkeiten der beteiligten Linsen führen, welche die Gesamtkorrektion merklich bis erheblich verschlechtern.

Aufgrund der Brechungsindexwechsel in den Apochromaten nach II. und III. kommt es an allen Grenzflächenübergängen zu unvermeidlichen Reflexionen, insbesondere bei großen Brechzahldifferenzen zwischen den Gläsern, vor allem aber an den Glas-Luft-Übergängen, die sich zu einer nicht unerheblichen Gesamtreflexion summieren. Die bekannten Apochromate haben daher eine nicht unerhebliche restliche Reflektivität, die den Kontrast merklich bis erheblich mindert und auch in der Bildebene zu unerwünschten, störenden Reflexen (sogenannte "Geisterbilder") führt.

Eine Reflexminderung durch dünne Schichten auf den Glas-Luft Grenzflächen kann diese Effekte zwar mindern, für den Fall extrem hoher eingestrahlter optischer Leistungen (LASER) führen jedoch schon kleine Bruchteile des reflektierten Lichtes in Verbindung mit der stets endlichen Absorption im Glas zu unakzeptablen thermischen und/oder optischen Belastungen durch nicht lineare Effekte.

Weiterhin weisen alle anderen Apochromaten mit Luftspalt wie oben unter II. und III. genannt folgende Nachteile bei der Fertigung und Handhabung auf:

1. Alle Glasflächen an Glas-Luft-Übergängen müssen mit hohem Aufwand in Form und Oberflächengüte hergestellt und auspoliert werden;

2. es muss ein hoher Aufwand zur Justierung des Luftspaltes betrieben werden, da sonst Dezentrierungsfehler und Achskoma entstehen;

3. die Kristall- bzw. Sonderglaslinsen weisen meist extrem geringe Schleifhärten auf, was zu einem erhöhten technologischen Fertigungsaufwand für die notwendige Politur führt;

4. Kristall- bzw. Sonderglaslinsen weisen einen großen thermischen Ausdehnungskoeffizienten auf, der zu großen Radiusänderungen und damit zu einer temperaturabhängigen Veränderung der Korrektur des Apochromaten führt;

5. auch bei einer zu Beginn vorgenommenen aufwendigen Justierung der Linsen zueinander kann später bei der Handhabung des Apochromaten durch Erschütterungen der Linsenstapel verrutschen; dadurch auftretende Dezentrierungs- und Kippfehler der Linsen verringern die Abbildungsgüte erheblich, bis hin zur Unbrauchbarkeit.

Ein Apochromat nach dem Oberbegriff von Anspruch 1 und vom oben genannten Typ I. ist zum Beispiel in DD 241 142 A1 beschrieben. Der beschriebene Apochromat besteht aus einer Anordnung von drei aufeinanderfolgenden sammelnden und zerstreuenden Linsen, zwischen denen als Fügemedium ein fluides, optisch transparentes Mittel zur Kopplung der Linsen vorgesehen ist. Als optische Linsen werden zwei aus einer speziellen Glasart bestehende zerstreuende Menisken verwendet, zwischen denen über das Fügemedium formschlüssig gekoppelt eine aus einem Kristall oder einem in den erforderlichen Parametern kristallähnlichen Glas bestehende Bikonvexlinse angeordnet ist. Durch die so geschaffene Brechkraftfolge -(+)- sowie durch spezielle Ausgestaltung der optischen Linsen soll ein hoher Transmissionsgrad durch Vermeidung von Reflexionsverlusten erreicht werden. Die erste optische Linse ist ein zerstreuender Meniskus aus Glas, die zweite optische Linse eine Bikonvexlinse aus Flussspat oder Flussspat ähnlichem Glas und die dritte optische Linse ein weiterer zerstreuender Meniskus aus Glas. Die erste und die dritte aus Glas bestehende Linse sind zum Beispiel durch folgende Kennwerte charakterisiert: Hauptbrechungsindex $n_e = 1,52294 \pm 0,03$, Abbé-Zahl $\nu e = 59,90 \pm 3,0$ und relative Teildispersion $\theta_e = 0,5096 \pm 0,005$. Dabei ist die Abbe-Zahl durch $\nu e = (n_e - 1) / (n_{F'} - n_{C'})$ definiert, wobei $n_{F'}$ der Brechungsindex bei der F'-Linie von 479,9 nm ist und $n_{C'}$ der Brechungsindex bei der C'-Linie von 643, 8 nm ist, und wobei die relative Teildispersion definiert ist durch $\theta'_{gF'} = (ng - n_{F'}) / (n_{F'} - n_{c'})$. Der in dieser Patentschrift beschriebene Apochromat entspricht dem Modell Zeiss APQ 100/1000, der aus dem Glas ZK2 für die äußeren Menisken und Flussspat $CaF_2$ für die mittlere Bikonvexlinse ausgebaut ist. $CaF_2$ hat einen Brechungsindex von $n_e = 1,43$, so dass sich hier Brechungsindexdifferenzen $\Delta n_e$ (ZK2 zu $CaF_2$) von 0,09 ergeben.

Ein weiterer bekannter Apochromat (Zeiss APQ 100/1000) verwendet einen Aufbau aus BaK2, $CaF_2$ und K11 (Bezeichnung der Gläser in der Schott-Terminologie). Hier gilt für die Brechungsindizes $n_e$ (BaK2) = 1,54, $n_e$ ($CaF_2$) = 1,43 und $n_e$ (K11) = 1,50, und für die Brechungsindexdifferenz aufeinanderfolgender Linsen $\Delta n_e$ (BAK-$CaF_2$) = 0,11 und $\Delta n_e CaF_2$-K11) = 0,07.

Ein weiterer bekannter, ähnlicher Apochromat nach DE 43 10 660 verwendet neben einer Sonderglaslinse nur identische optische Medien, die zu einer ungünstigen Brechkraftverteilung (typisch 15% höher und damit ungünstiger als beim Apochromaten nach Anspruch 1) und somit zu einer höheren Empfindlichkeit gegenüber Dezentrierungen und Kippungen führen. Laut Aussage des Anmelders von DE 43 10 660 sind derartige Apochromate aufwändig zu fassen und weisen bei ungünstiger Brechkraftverteilung einen höheren Gaußfehler (farbabhängiger Öffnungsfehler) auf (U. Laux, Astrooptik, Verlag Sterne und Weltraum, 2. Auflage 1992, Seite 41 ff.). Dieser führt zu einem hohen Fertigungsaufwand, sofern eine gleichbleibend hohe Abbildungsqualität sichergestellt sein soll (ebd. S. 46 f.).

Bei den herkömmlichen Entwurfsverfahren für Apochromaten wurden die Gläser in der Regel aus einem Graphen der Teildispersion $\theta_{gF}$ als Funktion der Abbe-Zahl $\nu_e$ herausgesucht, um die gewünschte Farbkorrektur zu erhalten. Dabei blieb der Brechungsindex zunächst unberücksichtigt, da für sogenannte Normalgläser der Brechungsindex von der Abbe-Zahl linear abhängig ist und daher nicht als unabhängiger Parameter zur Verfügung stand. Daher wurde der Brechungsindex nicht als primärer Entwurfsparameter angesehen, sondern ergab sich durch die Auswahl der anderen Parameter.

Darüber hinaus wird bei den bisherigen Lösungen unter I. der Brechungsindex der Gläser und/oder Kristalle nicht aufeinander abgestimmt. Bei den vorgefundenen großen Brechzahldifferenzen bisheriger Systeme nach I. erwachsen folgende Nachteile:

- Die produktionsbedingt unvermeidlichen Radien- und Dickenschwankungen führen stets zu großen Abweichungen von der idealen Korrektur, insbesondere bei hoch geöffneten Systemen (Blendenzahl k' <= 6).
- Ungünstige Brechkraftverteilungen bei Verwendung identischer optischer Gläser, die einen erhöhten Gaußfehler und eine erhöhte Zentrier- bzw. Kippempfindlichkeit mit sich bringen.
- Weiterhin führt eine unvermeidbare Verschiebung der Linsen untereinander zu Dezentrierungs- und Kippfehlern, welche die Abbildung bis zur Unbrauchbarkeit stören.
- Reflexe an den inneren Flächen bleiben bauartbedingt nicht minimierbar.
- Durch die Einführung schwermetallfreier Gläser (z. B. N-... Gläser bei Schott und S-... Gläser bei Ohara) und die Verringerung der verfügbaren Glastypen und Kristalle durch die Glashersteller, sind viele Systeme nach dem Stand der Technik nur noch eingeschränkt oder gar nicht mehr herstellbar, wie etwa die Apochromaten nach DE 43 10 660 und DD 241 142 A1.

Diese Eigenschaften machen die Herstellung unmöglich oder erschweren die Herstellung einer gleichbleibend hohen Abbildungsqualität, insbesondere die Serienproduktion von Apochromaten nach I., z.B. durch erhöhte Fertigungskontrolle und durch aufwendige Fassungen.

Es ist Aufgabe der vorliegenden Erfindung, einen Apochromaten und ein Verfahren zu dessen Entwurf anzugeben, der die physikalisch erreichbare geometrische und farbliche Korrektur von Apochromaten unter Verwendung von kostengünstigen, verfügbaren Gläsern, Kristallen und Sondergläsern bei geringem technologischem Aufwand bei der Herstellung und Justierung bei gleichzeitig hoher Stabilität gegenüber Strahlung, Temperatur für einen robusten Einsatz ermöglicht.

Zur Lösung dieser Aufgabe dient ein Apochromat mit den kennzeichnenden Merkmalen des Anspruchs 1 in Verbindung mit dessen Oberbegriff sowie ein Verfahren mit den kennzeichnenden Merkmalen des Anspruchs 5 in Verbindung mit dessen Oberbegriff. Vorteilhafte Ausführungsformen der Erfindung sind in den abhängigen Ansprüchen angegeben.

Bei den erfindungsgemäßen Apochromaten aus wenigstens drei aufeinanderfolgenden Linsen i,j,k bestehen sämtliche Linsen aus unterschiedlichen optischen Gläsern; dabei sind die Linsen und das Fügemedium so aufeinander abgestimmt, dass praktisch keine Brechungsindexwechsel (Betrag der Brechungsindexdifferenz maximal 0,02) auftreten, wodurch die Reflexion minimiert ist. Ferner sind sämtliche Linsen aus unterschiedlichen optischen Gläsern und sind Linsenpaare aufeinanderfolgender Linsen i,j und j,k der optischen Glasart nach so ausgewählt,

dass für das erste Linsenpaar i,j die Differenz der Brechungsindices $n_d$ die Bedingung $\Delta n_{ij} \leq 0,02$ erfüllt, dass die Differenz der Abbe-Zahl die Bedingung $|\Delta \nu e_{ij}| \geq 5,00$, und dass die Differenz der relativen Teilsdispersionen im blauen Spektralbereich die Bedingung $\Delta \theta'_{gF'ij} \leq 0,005$ erfüllt, wobei die Abbe-Zahl definiert ist durch $\nu e = (n_e - 1) / (n_{F'} - n_{C'})$, die relative Teildispersion durch $\theta'_{gF'} = (n_g - n_{F'}) / (n_{F'} - n_{C'})$, so dass die Differenz der Abbé-Zahl definiert ist durch

$$|\Delta \nu e_{ij}| = |(n_{ei})/(n_{F'i} - n_{C'i}) - (n_{ej}/(n_{F'j} - n_{C'j})|$$

und die Differenz der Teildispersion zwischen zwei Linsen i und j definiert ist durch

$$\Delta \theta'_{gF'\,ij} = ((n_{gi} - n_{F'i})/(n_{F'i} - n_{C'i})) - ((n_{gj} - n_{F'j})/(n_{F'j} - n_{C'j})),$$

und

dass für das zweite Linsenpaar j,k die Differenz der Brechungsindices $n_d$ die Bedingung $\Delta n_{jk} \leq 0,02$ erfüllt, dass die Differenz der Abbe-Zahl die Bedingung $|\Delta \nu e_{jk}| \geq 5,00$, und dass die Differenz der relativen Teilsdispersionen im roten Spektralbereich die Bedingung $\Delta \theta'_{C'sjk} \leq 0,005$ erfüllt, wobei die Abbé-Zahl definiert ist durch $\nu e = (n_e - 1) / (n_{F'} - n_{C'})$, die relative Teildispersion durch $\theta'_{C's} = (n_{C'} - n_s)/(n_{F'} - n_{C'})$, so dass die Differenz der Abbe-Zahl definiert ist durch

$$|\Delta \nu e_{jk}| = |(n_{ej})/(n_{F'j} - n_{C'j}) - (n_{ek})/(n_{F'k} - n_{C'k})|$$

und die Differenz der Teildispersion definiert ist durch

$$\Delta \theta'_{C's\,jk} = ((n_{C'j} - n_{sj})/(n_{F'j} - n_{C'j})) - ((n_{C'k} - n_{sk})/(n_{F'k} - n_{C'k})).$$

Der Betrag der Differenz zwischen dem Brechungsindex $n_d$ des Fügemediums dem Brechungsindex der an die Fügemediumschicht anschließenden Linsen beträgt maximal 0,02.

Der erfindungsgemäße Apochromat hat nur zwei Luft-Glas-Übergänge, die Reflexion erzeugen können. Da alle Linsen einen nahezu gleichen Brechungsindex aufweisen und die restliche Reflektivität weniger als 0,026% des einfallenden Lichtstroms beträgt, was etwa 4 bis 20 mal weniger ist, als das, was herkömmliche Apochromaten erreichen, durchläuft die Wellenfront das Innere des Linsenstapels ohne Lichtverlust und ohne messbare weitere Brechung, d.h. die Lichtstrahlen werden praktisch nicht mehr abgelenkt.

Üblicherweise werden die Teildispersionen (differentielle Teilspektren) wie oben definiert:

$$\theta'_{gF'} = (n_g - n_{F'})/(n_{F'} - n_{C'}) \text{ blauer Teil des Spektrums}$$

$$\theta'_{C's} = (n_{C'} - n_s)/(n_{F'} - n_{C'}) \text{ roter Teil des Spektrums}$$

bezogen auf das Gesamtspektrum von der F'-Linie bei 479,9 nm bis zur C'-Linie bei 643,8 nm.

Historisch bedingt werden häufig auch folgende Teildispersionen benutzt:

$$\theta_{gF} = (n_g - n_F)/(n_F - n_C) \qquad \text{blauer Teil des Spektrums}$$

$$\theta_{Cs} = (n_C - n_s)/(n_F - n_C) \qquad \text{roter Teil des Spektrums}$$

bezogen auf das Gesamtspektrum von der F-Linie bei 486,1 nm bis zur C-Linie bei 656,3 nm.

Bisher wurde beim Entwurf von Apochromaten lediglich Bezug auf eine relative Teildispersion, in der Regel auf $\theta'_{gF'}$ oder auf $\theta_{gF}$ genommen.

Beim erfindungsgemäßen Apochromaten wird Bezug auf zwei relative Teildispersionen genommen, da unterschiedliche Partnergläser entsprechend ausgewählt werden können:

1. Sonderglas und Partnerglas 1 gepaart in Bezug auf $\theta'_{gF'}$ oder $\theta_{gF}$.
2. Sonderglas und Partnerglas 2 gepaart in Bezug auf $\theta'_{C's}$ oder $\theta_{Cs}$.

Beispiel 1:

Erfindungsgemäßer Apochromat, Brechkraftfolge (-(+)-)

Die blaue Paarung ist optimal für N-ZK7 und N-PK52A, die rote Paarung für N-PK52A und N-BAK2, wobei in der nachfolgenden Tabelle die genannten Differenzen der Teildispersionen für die beiden Linsenpaare angegeben ist.

| Schott-Glas | $\theta'_{gF'}$ | | $\theta'_{C's}$ | |
|---|---|---|---|---|
| N-ZK7 | 0,4771 | | 0,6017 | |
| N-PK52A | 0,4774 | $\Delta=0,0003$ | 0,5858 | |
| N-BAK2 | 0,4826 | | 0,5817 | $\Delta=0,0041$ |

Beispiel 2:

Erfindungsgemäßer Apochromat, Brechkraftfolge (+)-(+)

Die blaue Paarung ist optimal für N-SSK8 und N-KZFS4, die rote für N-KZFS4 und N-BALF4, wobei in der nachfolgenden Tabelle die genannten Differenzen der Teildispersionen für die beiden Linsenpaare angegeben ist.

| Schott-Glas | $\theta'_{gF'}$ | | $\theta'_{C's}$ | |
|---|---|---|---|---|
| N-SSK8 | 0,4967 | | 0,5594 | |
| N-KZFS4 | 0,4958 | $\Delta=0,0009$ | 0,5657 | |
| N-BALF4 | 0,4897 | | 0,5689 | $\Delta=0,0025$ |

Für vergleichbare Gläser anderer Hersteller gelten die obigen Betrachtungen analog.

Die genannten Maßnahmen führen zu einer optimalen Brechkraftverteilung und damit zu einer großen optischen Stabilität des Apochromaten gegenüber mechanischen Einflüssen, wie etwa Dezentrierungs- oder Kippfehlern bei der Montage oder durch Erschütterungen bei der Handhabung. Ferner kommt es bei Anwendungen mit hohen Lichtintensitäten (z.B. Laserlicht sehr hoher Leistung) zu einer extrem geringen Energiedeposition (Erwärmung) in dem Apochromaten.

Die Linsen sollen nach ihren Brechungsindizes gleich oder annähernd gleich (Brechungsindexdifferenz $\leq 0,02$) sein und eine gleiche oder annähernd gleiche Teildispersionen wie in Anspruch 1 definiert für ein Linsenpaar im Blauen und für das andere im Roten haben, wobei diese Anpassung aneinander wenigstens soweit gehen soll, dass die Wellenfront einer den Apochromaten durchlaufenden Welle im gewünschten Spektralbereich insgesamt um weniger als $\lambda/4$ deformiert wird.

Der technologische Aufwand sinkt gegenüber dem Stand der Technik erheblich, während die Güte der hergestellten Apochromate trotz geringerer Anforderungen an die Fertigungsgenauigkeit im visuellen Spektrum zwischen den Linien F' (479,9 nm) und C' (643,8 nm) die Beugungsgrenze vollständig überschreitet.

Bei einem erfindungsgemäßen Verfahren zum Entwurf eines Apochromaten mit drei aufeinanderfolgenden Linsen i,j,k, wobei jedes Paar aufeinanderfolgender Linsen eine sammelnde und eine zerstreuende Linse umfasst, wobei aufeinanderfolgende Linsen dem Betrag nach gleiche, rein sphärische Krümmungsradien haben und durch ein dazwischen befindliches Fügemedium gekoppelt sind, ist vorgesehen

dass sämtliche Linsen aus unterschiedlichen optischen Gläsern ausgewählt werden,

dass Linsenpaare aufeinanderfolgender Linsen i,j und j,k der optischen Glasart nach so ausgewählt werden,

dass für das erste Linsenpaar i,j die Differenz der Brechungsindices $n_d$ die Bedingung $\Delta n_{ij} \leq 0{,}02$ erfüllt, dass die Differenz der Abbe-Zahl zwischen den zwei aufeinanderfolgenden Linsen die Bedingung $|\Delta ve_{ij}| \geq 5{,}00$, und dass die Differenz der relativen Teildispersionen im blauen Spektralbereich die Bedingung $\Delta \theta'_{gF'ij} \leq 0{,}005$ erfüllt, wobei die Abbé-Zahl definiert ist durch $ve = (n_e - 1) / (n_{F'} - n_{C'})$, die relative Teildispersion durch $\theta'_{gF'} = (n_g - n_{F'}) / (n_{F'} - n_{C'})$, so dass die Differenz der Abbe-Zahl definiert ist durch

$$|\Delta ve_{ij}| = |(n_{ei})/(n_{F'i} - n_{C'i}) - (n_{ej}/(n_{F'j} - n_{C'j})|$$

und die Differenz der Teildispersion zwischen zwei Linsen i und j im blauen Spektralbereich definiert ist durch

$$\Delta \theta'_{gF'ij} = ((n_{gi} - n_{F'i})/(n_{F'i} - n_{C'i})) - ((n_{gj} - n_{F'j})/(n_{F'j} - n_{C'j})),$$

und

und dass für das zweite Linsenpaar j,k die Differenz der Brechungsindices $n_d$ die Bedingung $\Delta n_{jk} \leq 0{,}02$ erfüllt, dass die Differenz der Abbé-Zahl zwischen den Linsen die Bedingung $|\Delta ve_{jk}| \geq 5{,}00$, und dass die Differenz der relativen Teilsdispersionen im roten Spektralbereich die Bedingung $\Delta \theta'_{C's jk} \leq 0{,}005$ erfüllt, wobei die Abbe-Zahl definiert ist durch $ve = (n_e - 1) / (n_{F'} - n_{C'})$, die relative Teildispersion durch $\theta'_{C's} = (n_{c'} - n_s) / (n_{F'} - n_{C'})$, so dass die Differenz der Abbe-Zahl definiert ist durch

$$|\Delta ve_{jk}| = |(n_{ej})/(n_{F'j} - n_{C'j}) - (n_{ek})/(n_{F'k} - n_{C'k})|$$

und die Differenz der Teildispersion zwischen zwei Linsen j und k definiert ist durch

$$\Delta \theta'_{C's jk} = ((n_{C'j} - n_{sj})/(n_{F'j} - n_{C'j})) - ((n_{C'k} - n_{sk})/(n_{F'k} - n_{C'k}))$$

Das Fügemedium wird derart ausgewählt, dass sein Brechungsindex $n_d$ von dem Brechungsindex $n_d$ der an die Fügemediumschicht angrenzenden Linsen maximal um 0,02 abweicht.

Bei den herkömmlichen Entwurfsverfahren für Apochromaten wurde die Differenz der Brechungsindizes der einzelnen Linsen und Fügemediumschichten nicht als anpassbarer Parameter erkannt, da z.B. nicht berücksichtigt worden ist, dass bei Sondergläsern mit anomaler Dispersion sich der Brechungsindex nicht automatisch aus der gewünschten Abbe-Zahl ergibt.

Bei Entwurfsverfahren für Apochromaten wird bisher so vorgegangen, dass die Summe aller optisch wirksamen Abweichungen oder Fehler des Apochromaten minimiert wird. Bei den herkömmlichen Entwurfsverfahren wurden dabei in aller Regel nur lokale Minima gefunden, d.h. die gefundene Lösung für den Aufbau des Apochromaten ist nicht robust gegenüber Abweichungen von den Idealparametern, z.B. durch Fertigungsabweichungen. Bei Auswahl der Gläser wie in dem beanspruchten Verfahren und durch Einbeziehung der Differenz des Brechungsindexes und unter Hinzuziehung der Zwangsbedingung, dass die Brechungsindizes aufeinanderfolgender Linsen und Fügemedienschichten gleich oder annähernd gleich sein sollen, in das mathematische Entwurfsverfahren gelingt es, das absolute Minimum der Summe aller optisch wirksamen Abweichungen oder Fehler zu finden, d.h. eine Lösung für den Aufbau des Apochromaten, die robust ist gegenüber geometrischen Fertigungsabweichungen und Abweichungen der in dem Entwurfsverfahren verwendeten Parameter. Dies führt zu einem erheblich robusteren Aufbau, der erheblich weniger Aufwand bei der Herstellung, der Montage der Komponenten und ihrer Justierung erfordert.

Bei der Fertigung tritt eine Vereinfachung auch insoweit ein, als die Linsen keine extrem feine Politur wie im Stand der Technik benötigen, sondern ein Feinschliff ausreicht, da die Forderung nach einer verschwindenden Differenz der Brechungsindizes in Verbindung mit dem flüssigen Fügemedium die Oberfläche der feingeschliffenen Linse optisch wirksam vergütet. Durch die gleichen Krümmungsradien der Menisken aus den schleifhärteren Gläsern wird die Korrektion des Systems sichergestellt. Bei der Handhabung ist der erfindungsgemäße Apochromat robuster, denn geringfügige Positionsveränderungen der Linsen infolge von Erschütterungen werden vom Fügemedium aufgefangen und haben wegen des verschwindenden Unterschiedes der Brechungsindizes der Linsen keine Auswirkungen mehr. Aus dem gleichen Grund spielen auch thermische Ausdehnungen keine Rolle mehr, da die Ausdehnung bzw. das Zusammenziehen der Linsen wiederum vom Fügemedium aufgenommen werden kann und auch hier wegen der annähernden Gleichheit der Brechungsindizes keine optische Wirkung erzielt wird. Das optische Fügemedium ist ein viskoses, fluides Medium oder ein flexibel deformierbares Medium, das Positions- oder Ausdehnungsänderungen der Linsen aufnehmen kann. Spannungskräfte, wie in verkitteten System nachdem Stand der Technik treten hierbei nicht auf.

Ein Anwendungszweck der Erfindung besteht auch darin, polychromatisches, sichtbares Synchrotronlicht der Synchrotronstrahlungsquelle PETRA III zwecks Analyse der Wellenfront und der Zeitstruktur aus dem strahlungsbelasteten Beschleunigertunnel in ein außerhalb liegendes Labor zu transportieren. Hierfür werden große geometrisch und farblich hoch korrigierte apochromatische Optiken mit 50 bis 250 mm freier Öffnung benötigt, die ein Öffnungsverhältnis von 1:15 bis 1:5 ermöglichen müssen. Für den Transport der Wellenfront durch ein Relais mit drei Apochromaten, muss die polychromatische Abbildung in genau einer Bildebene, genau der Bildebene des jeweils folgenden Apochromaten, sichergestellt sein.

Die Erfindung wird im Folgenden anhand von Ausführungsbeispielen in den Zeichnungen beschrieben, in denen:

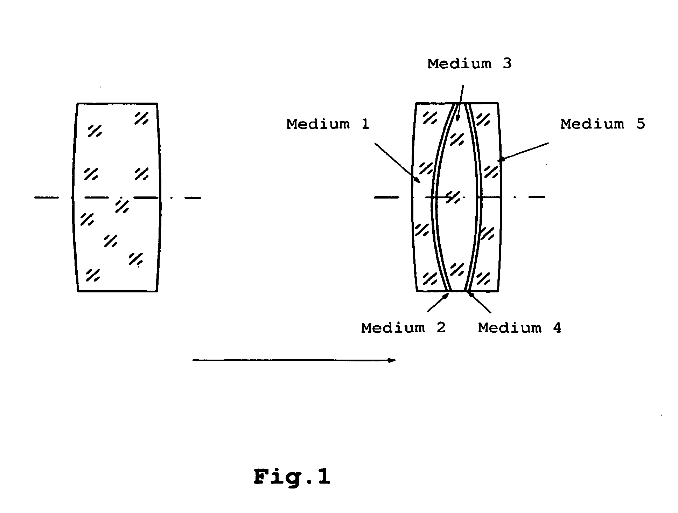

Fig. 1 einen Apochromaten mit einer Brechkraftfolge (-(+)-) links in einer Ansicht nach der Brechzahl und rechts in einer Ansicht nach den Bauteilen zeigt,

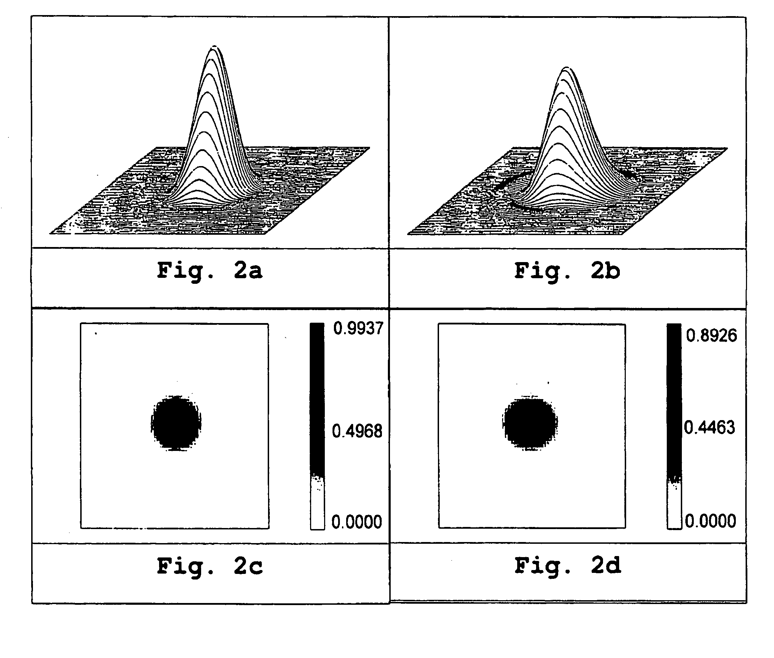

Figur 2a die Helligkeitsverteilung (Definitionshelligkeit) einer punktförmigen Lichtquelle in der Bildebene eines erfindungsgemäßen Apochromaten mit den Aufbau gemäß Figur 1 und Figur 2b die Helligkeitsverteilung desselben Aprochromaten zeigt, nachdem die Mittellinse um $50\,\mu$m senkrecht zur optischen Achse verschoben und um 5' gegenüber der optischen Achse verkippt worden ist, Figur 2c zeigt die Projektion von 2a auf die Bildebene, Figur 2d die Projektion von 2b auf die Bildebene.

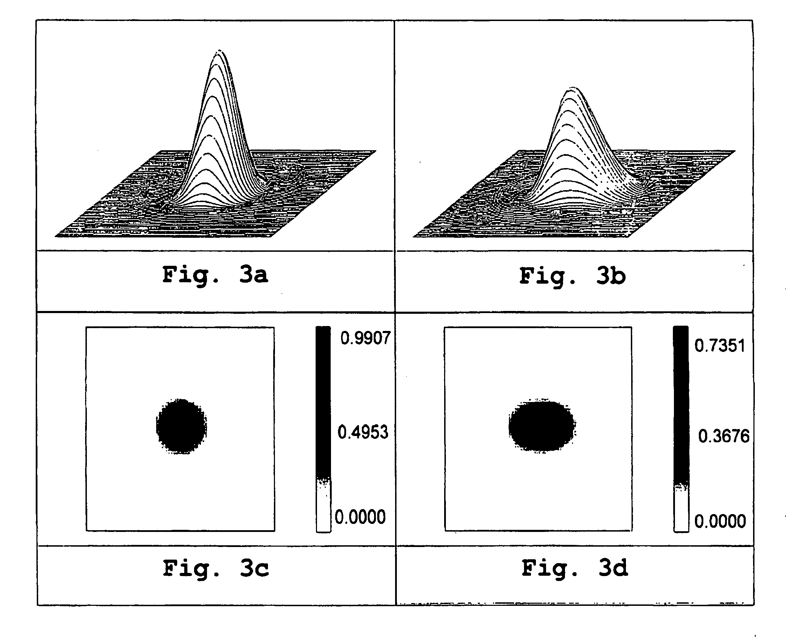

Figuren 3a und 3b die Helligkeitsverteilungen entsprechend Figuren 2a und 2b vor und nach Versetzung der Mittellinse ($50\,\mu$m senkrecht zur optischen Achse verschoben und um 5' gegen die optische Achse verkippt) für einen Apochromaten nach dem Stand der Technik gemäß DE 43 10 660 A1 zeigen, 3c und 3d zeigen Projektionen wie 2c und 2d

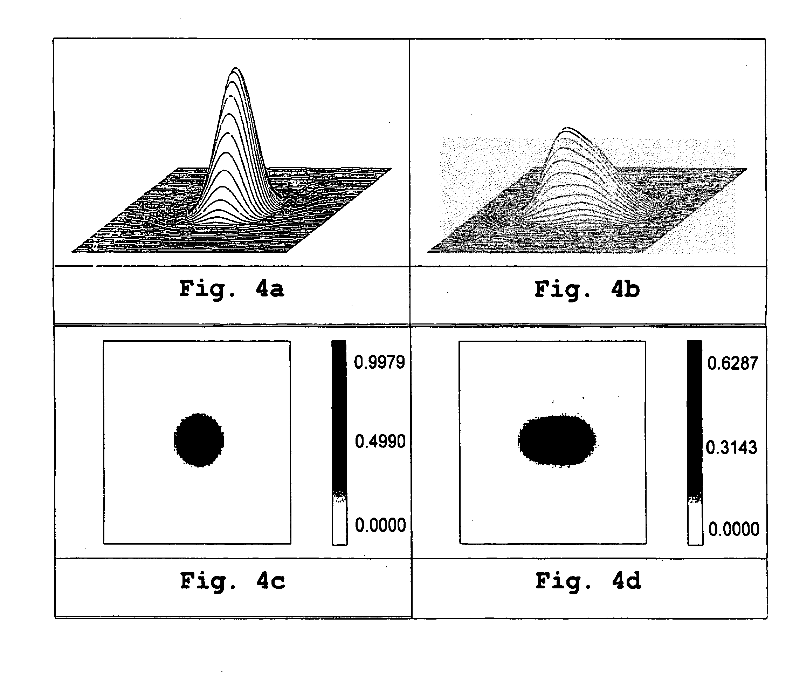

Figuren 4a und 4b die Helligkeitsverteilungen entsprechend Figuren 2a und 2b vor und nach Versetzung der Mittellinse ($50\,\mu$m senkrecht zur optischen Achse verschoben und um 5' gegen die optische Achse verkippt) für einen Apochromaten nach dem Stand der Technik gemäß DD 241 142 A1 zeigen, 4c und 4d zeigen Projektionen wie 2c und 2d,

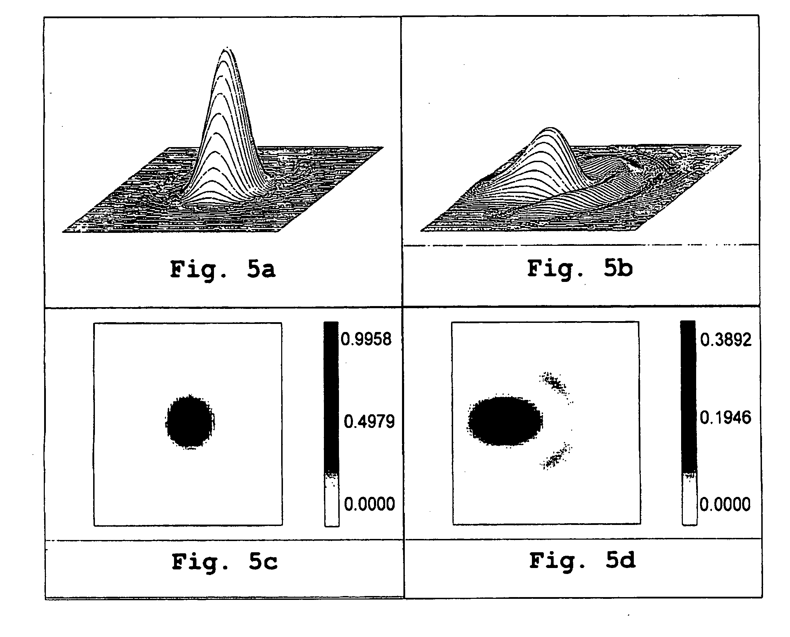

Figuren 5a und 5b die Helligkeitsverteilungen entsprechend Figuren 2a und 2b vor und nach Versetzung der Mittellinse ($50\,\mu$m senkrecht zur optischen Achse verschoben und um 5' gegen die optische Achse verkippt) für einen weiteren Apochromaten gemäß einem Stand der Technik zeigen (LZOS - Optisches Kombinat Lytkarino bei Moskau, LZOS Firmenschrift, JSC "LZOS"), 5c und 5d zeigen Projektionen wie 2c und 2d,

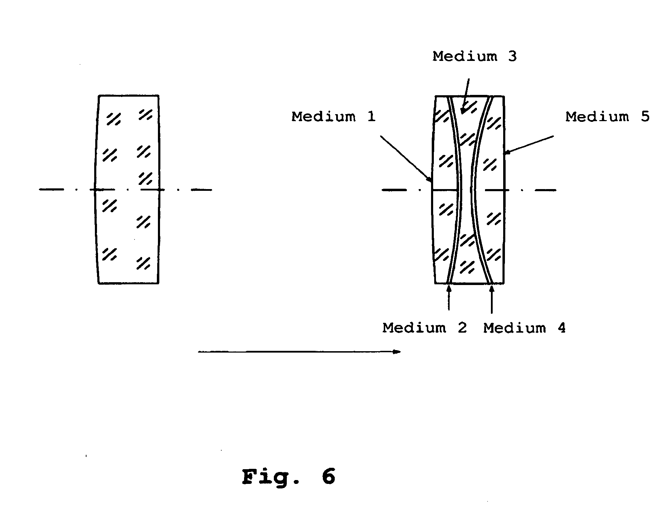

Fig. 6 einen erfindungsgemäßen Apochromaten mit einer Brechkraftfolge (+)-(+) links in einer Ansicht nach der Brechzahl und rechts in einer Ansicht nach den Bauteilen zeigt,

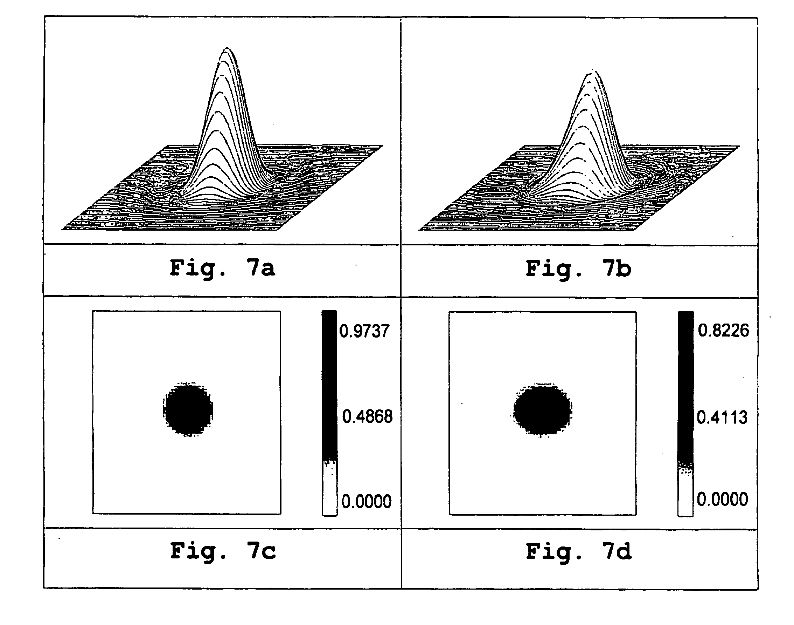

Figur 7a die Helligkeitsverteilung (Definitionshelligkeit) einer punktförmigen Lichtquelle in der Bildebene eines erfindungsgemäßen Apochromaten mit Aufbau gemäß Figur 6 und Figur 7b die Helligkeitsverteilung desselben Aprochromaten zeigt, nachdem die Mittellinse um $50\,\mu$m senkrecht zur optischen Achse verschoben und um 5' gegenüber der optischen Achse verkippt worden ist, Figur 7c zeigt die Projektion von 7a auf die Bildebene, Figur 7d die Projektion von 7b auf die Bildebene.

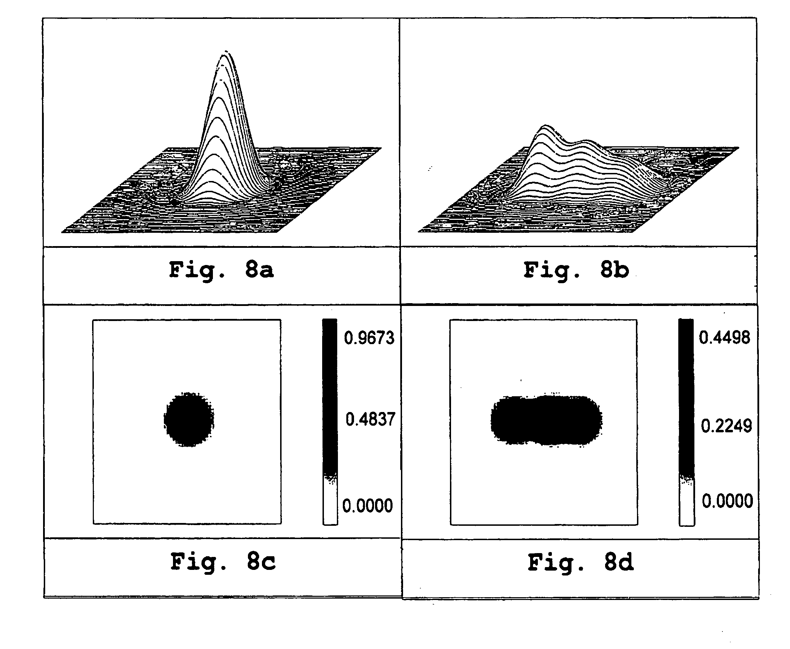

Figuren 8a und 8b die Helligkeitsverteilungen entsprechend Figuren 7a und 7b vor und nach Versetzung der Mittellinse ($50\,\mu$m senkrecht zur optischen Achse verschoben und um 5' gegen die optische Achse verkippt) für einen Apochromaten nach dem Stand der Technik gemäß dem Artikel von Roland Christen, 'Revised Trioplet Design', Sky and Telescope (April 1982), Seiten 411-412, zeigen, 8c und 8d w zeigen Projektionen ie 7c und 7d,

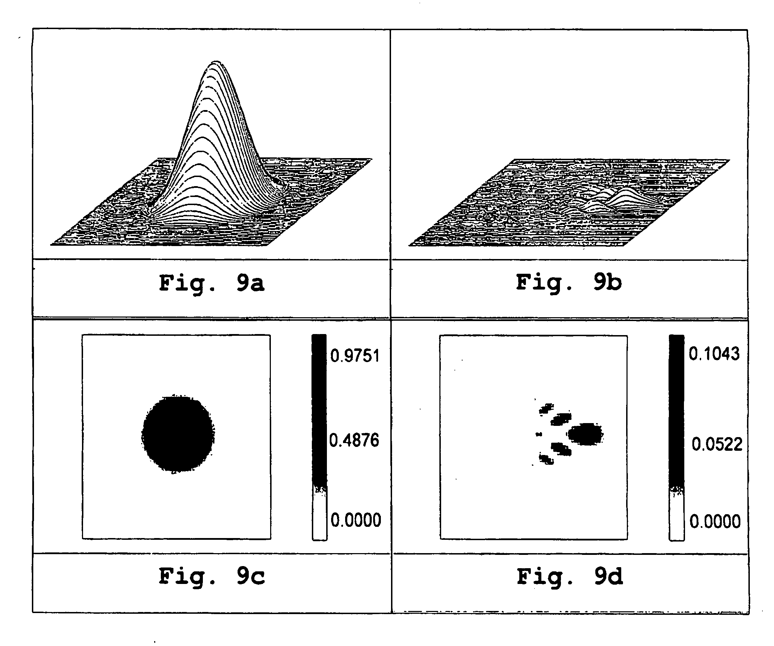

Figuren 9a und 9b die Helligkeitsverteilungen entsprechend Figuren 7a und 7b vor und nach Versetzung der Mittellinse ($50\,\mu$m senkrecht zur optischen Achse verschoben und um 5' gegen die optische Achse verkippt) für einen weiteren Apochromaten gemäß einem Stand der Technik zeigen (B-Objektiv Carl Zeiss Jena). 9c und 9d zeigen Projektionen wie 7c und 7d.

Figur 1 zeigt einen erfindungsgemäßen Apochromaten mit der Brechkraftfolge (-(+)-). Dieser Apochromat ist aus kronartigen Gläsern oder Kristallen aufgebaut. Ein Beispiel mit den technischen Daten der Linsen und ihrer Anordnung ist in der unten aufgeführten Tabelle gegeben.

Figur 1 zeigt links den erfindungsgemäßen Apochromaten in einer Ansicht nach der Brechzahl, in der der Apochromat als einheitliches Medium erscheint, da die Brechungsindexdifferenzen der Linsen und des Fügemediums minimal sind. In der rechten Darstellung sind die Komponenten des Apochromaten als Bauteile dargestellt. Dabei folgt auf eine erste Meniskuslinse (Medium 1) eine bikonkave Mittellinse (Medium 3) und darauf wieder eine Meniskuslinse (Medium 5), wobei in den Zwischenräumen zwischen diesen Linsen jeweils ein Fügemedium (Medium 2 und 4) vorgesehen ist, derart das die Linsen miteinander koppelt und das der Brechungsindex an die Linsen angepasst ist. Als Fügemedium wird jeweils ein Phenylmethylsilikonöl verwendet. Gläser und Fügemedium sind so gewählt, dass die Differenz der Brechungsindices im Licht der Helium d-Linie von 587,6 nm maximal $|\Delta n_d|=0,02$ beträgt.

In der nachfolgenden Tabelle wird ein derartiges System für eine Blendenzahl k'=6 beschrieben.

Apochromat mit Brechkraftfolge (-(+)-)

Allgemeine Beschreibung

| Flächen | 5 |
|---|---|
| Blenden | 1 |
| Freie Öffnung / mm | 50 |
| Temperatur / °C | 2,00000E+001 |
| Luftdruck / 1013,25 hPa | 1,00000E+000 |
| Bemerkung | Glasdaten an Umgebungsdaten angepasst |
| Brennweite Objektraum / mm | 311,0 (Luft bei Temperatur und Druck) |
| Brennweite / mm | 310,9674 (bildseitig) |
| Schnittweite / mm | 293,5585 (bildseitig) |
| Blendenzahl | 6,2 |
| Blenderadius / mm | 25 |
| Paraxiale Bildhöhe / mm | 2,985164 |
| Paraxiale Vergrößerung | 0 |
| Durchmesser Eintrittspupille / mm | 50 |
| Lage der Eintrittpupille / mm | 0 |
| Durchmesser Austrittspupille / mm | 50,31756 |
| Lage der Austrittspupille / mm | -312,8961 |
| Max. Feldradius / Grad | 0,55 |
| Hauptwellenlänge / μm | 0,546074 |
| Konstruktionseinheit | Millimeter |

| Felder | 3 | |
|---|---|---|
| Feldtyp | Winkel / Grad | |
| # | X-Wert | Y-Wert | Gewichtung |
| 1 | 0,000000 | 0,000000 | 1,000000 |
| 2 | 0,000000 | 0,385000 | 1,000000 |
| 3 | 0,000000 | 0,550000 | 1,000000 |

| Anzahl Wellenlängen | | 3 | |
|---|---|---|---|
| Einheit | | µm | |
| # | | Wert | Gewichtung |
| 1 | | 0, 479 | 1,000000 |
| 2 | | 0,546 | 1,000000 |
| 3 | | 0,656 | 1,000000 |

| Systemdaten | | | | | | |
|---|---|---|---|---|---|---|
| Fläche | Bezeichnung | Typ | Radius / mm | Dicke / mm | Glas | Durchmesser / mm |
| 0 | Objekt | - | Unenlich | Unenlich | | |
| 1 | Blende | Sphäre | 162,360 | 7,000 | S-BSL7 | 52 |
| 2 | | Sphäre | 65,966 | 15,000 | S-FPL51 | 52 |
| 3 | | Sphäre | 90,666 | 7,000 | S-NSL3 | 52 |
| 4 | | Sphäre | 892,836 | 293,512 | | 52 |
| 5 | Bild | Sphäre | Unenlich | | | 6 |

| Daten für Brechzahl | |
|---|---|
| Temperatur / ° Celsius | 20,00 |
| Luftdruck / hPa | 1013,25 |
| Absolute Brechzahl von Luft | 11,000273 bei 0,546 µm Wellelänge |

Brechzahlen relativ zur Brechzahl von Luft bei Systemtemperatur und Luftdruck, Wellenlängen gemessen in Luft bei Systemtemperatur und Luft-druck, Auswahlkriterium: Brechzahldifferenz $\Delta n_d$ kleiner gleich 0,02.

| Fläche | Glas | Temp. | Druck / 1013,25 hPa | 0,479 µm | 0,546 µm | 0,656 µm |
|---|---|---|---|---|---|---|
| 0 | | 20,00 | 1,00 | 1,00000000 | 1,00000000 | 1,00000000 |
| 1 | S-BSL7 | 20,00 | 1,00 | 1,52243275 | 1,51825459 | 1,51386363 |
| 2 | S-FPL51 | 20,00 | 1,00 | 1,50163249 | 1,49845730 | 1,49514276 |
| 3 | S-NSL3 | 20,00 | 1,00 | 1,52493927 | 1,52033014 | 1,51556492 |
| 4 | | 20,00 | 1,00 | 1,00000000 | 1,00000000 | 1,00000000 |
| 5 | | 20,00 | 1,00 | 1,00000000 | 1,00000000 | 1,00000000 |

| Thermische Ausdehnungskoeffizienten | | |
|---|---|---|
| Linse | Glas | TCE in m/m *10E-6 |
| 1 | S-BSL7 | 7,20000000 |
| 2 | S-FPL51 | 13,10000000 |
| 3 | S-NSL3 | 9,00000000 |

Figur 2a zeigt die Helligkeitsverteilung des in diesem Beispiel beschriebenen erfindungsgemäßen Apochromaten d=100 mm, f' = 1000 mm, wobei die Helligkeitsverteilung einer punktförmigen Lichtquelle in der Bildebene des Apochromaten dargestellt ist. Die Helligkeitsverteilungen sind über die Wellenlängen des sichtbaren Lichts integriert. Die dargestellte quadratische Fläche hat eine Kantenlänge von 32 μm. Die Helligkeitsverteilung (Definitionshelligkeit) hat in Figur 2a eine normierte Definitionshelligkeit von 99,5% bei der optimalen Justierung. Die Beugungsscheibe hat einen Durchmesser von etwa 13 μm. Um die Robustheit des erfindungsgemäßen Apochromaten gegenüber Verschiebungen oder Fehljustierungen darzustellen, ist in Figur 2b die Helligkeitsverteilung der punktförmigen Lichtquelle in der Bildebene des Apochromaten gezeigt, nachdem die Mittellinse um 50 μm axial nach außen verschoben und um 5' (5 Bogenminuten) gegenüber der Längsachse verkippt worden ist, was z.B. nach einem Stoß der Fall sein kann. Figur 2b zeigt, dass die Helligkeitsverteilung immer noch beugungsbegrenzt konzentriert ist (Beugungsbegrenzt: Definitionshelligkeit > 80%) und eine normierte Definitionshelligkeit von 84,8% erreicht, was immer noch eine praktisch sehr gut verwertbare Qualität ist.

Zum Vergleich sind in Figuren 4a und 4b die Helligkeitsverteilungen eines Apochromaten d=100 mm, f' = 1000 mm nach dem Stand der Technik gemäß DD 241 142 A1 gezeigt. Die Brechungsindices haben hier eine Differenz im Licht der Helium d-Linie bei 587,6 nm von $\Delta n_d$=0,096. Bei optimaler Justierung wie in Figur 4a gezeigt, zeigt auch dieser Apochromat eine hohe normierte Definitionshelligkeit von 99.8%. Allerdings ist die Qualität der Abbildung viel stärker von der exakten Justierung abhängig, was Figur 4b zeigt, bei der wieder die Mittellinse um 50 μm axial nach außen verschoben und um 5 Bogenminuten gegenüber der Längsachse verkippt ist. Die Helligkeitsverteilung erreicht hier nur noch eine normierte Definitionshelligkeit von 57,5%. Die Abbildung ist nicht mehr Beugungsbegrenzt, sondern deutlich schlechter.

Eine ähnliche Verschlechterung der Abbildung zeigen die Figuren 3b und 3d für einen Apochromaten gemäß DE 43 10 660 A1.

Figuren 5a und 5b zeigen zum Vergleich einen weiteren Apochromaten aus dem Stand der Technik. Dieser Apochromat d=100 mm, f' = 1000 mm hat eine Brechungsindexdifferenz $|\Delta n_d|$ von 0,447. Bei optimaler Justierung wie in Figur 5a dargestellt, erreicht auch dieser Apochromat eine hohe normierte Definitionshelligkeit von 99,6%. Nachdem die Mittellinse um 50 μm quer zur Längsachse verschoben und um 5 Bogenminuten zur Längsachse gekippt ist, ist die Qualität der Helligkeitsveteilung nach Figur 5b jedoch deutlich verschlechtert. Die Helligkeitsverteilung erreicht nur noch eine normierte Definitionshelligkeit von 38,9% und ist deutlich erkennbar nicht mehr beugungsbegrenzt.

Insbesondere die Unterfiguren jeweils zu c und zu d zeigen die deutliche bis starke Empfindlichkeit des Standes der Technik gegenüber geringen Fassungsfehlern, die eine merkliche bis erhebliche Störung der Bildsymmetrie bis hin zur Unbrauchbarkeit bewirken. Die erfindungsgemäßen Apochromate nach Anspruch 1 hingegen weisen bei den gleichen Störungen fast keine Verschlechterung der Bildsymmetrie auf und bleiben beugungsbegrenzt.

Im Folgenden wird ein weiteres Ausführungsbeispiel eines erfindungsgemäßen Apochromaten mit der Brechkraftfolge (+)-(+) beschrieben. Dieser Apochromat ist aus flintartigen Gläsern oder Kristallen hergestellt. Wegen der größeren Dispersion der Flintgläser gegenüber den Krongläsern, besitzen die flintartigen Apochromate generell eine etwas geringere Güte als die kronartigen Apochromate. Ein Beispiel mit den technischen Daten der Linsen und ihrer Anordnung ist in der weiter unten aufgeführten Tabelle angegeben.

Figur 6 zeigt links den erfindungsgemäßen Apochromaten d=100 mm, f' = 1000 mm in einer Ansicht nach der Brechzahl in der der Apochromat als ein einheitliches Medium erscheint; in diesem Beispiel ist die maximale Differenz der Brechungsindizes $\Delta n_d$=0,034; dabei folgt auf einer bikonvexen Linse (Medium 1) eine bikonkave Mittellinse (Medium 3) und auch wiederum eine bikonvexe Linse (Medium 5), wobei die Linsen durch ein optisches Fügemedium gekoppelt sind, das die Zwischenräume zwischen den Linsen auffüllt und im Brechungsindex jeweils die nachfolgende Linse angepasst ist. Im vorliegenden Beispiel wird als Fügemedium ein höheres Phenylmethylsilikonöl verwendet (Medium 2 und 4).

In der nachfolgenden Tabelle wird ein derartiges System für eine Blendenzahl k'=6 beschrieben.

Apochromat mit Brechkraftfolge (+)-(+)

| Allgemeine Beschreibung | |
|---|---|
| Flächen | 5 |
| Blenden | 1 |
| Freie Öffnung / mm | 50 |
| Temperatur / °C | 2,00000E+001 |

(fortgesetzt)

| Luftdruck / 1013,25 hPa | 1,00000E+000 |
|---|---|
| Bemerkung | Glasdaten an Umgebungsdaten angepasst |
| Brennweite Objektraum / mm | 299,5 (Luft bei Temperatur und Druck) |
| Brennweite / mm | 299,5 (bildseitig) |
| Schnittweite / mm | 288,7 (bildseitig) |
| Blendenzahl | 6 |
| Blendenradius / mm | 25 |
| Paraxiale Bildhöhe / mm | 2,875143 |
| Paraxiale Vergrößerung | 0 |
| Durchmesser Eintrittspupille / mm | 50 |
| Lage der Eintrittspupille / mm | 0 |
| Durchmesser Austrittspupille / mm | 50,62333 |
| Lage der Austrittspupille / mm | -303,2063 |
| Max. Feldradius / Grad | 0,55 |
| Hauptwellenlänge / μm | 0,546074 |

| Felder: | 3 | | |
|---|---|---|---|
| Feldtyp | Winkel / Grad | | |
| # | X-Wert | Y-Wert | Gewichtung |
| 1 | 0,000000 | 0,000000 | 1,000000 |
| 2 | 0,000000 | 0,385000 | 1,000000 |
| 3 | 0,000000 | 0,550000 | 1,000000 |

| Anzahl Wellenlängen Einheit | 3 μm | |
|---|---|---|
| # | Wert | Gewichtung |
| 1 | 0,479 | 1,000000 |
| 2 | 0,546 | 1,000000 |
| 3 | 0,656 | 1,000000 |

| Systemdaten | | | | | |
|---|---|---|---|---|---|
| Fläche | Typ | Radius / mm | Dicke / mm | Glas | Durchmesser / mm |
| 0 Objekt | - | Unendlich | Uendlich | | |
| 1 Blende | Sphäre | 213,189 | 9,000 | N-BALF4 | 52,0 |
| 2 | Sphäre | 80,0745 | 3,000 | N-KZFS4 | 52,0 |
| 3 | Sphäre | 46,960 | 11,000 | N-SSK8 | 52,0 |
| 4 | Sphäre | 630,890 | 288,680 | | 52,0 |

(fortgesetzt)

| Systemdaten | | | | | |
|---|---|---|---|---|---|
| Fläche | Typ | Radius / mm | Dicke / mm | Glas | Durchmesser / mm |
| 5 Bild | Sphäre | Unendlich | | | 5,8 |

| Daten für Brechzahl | |
|---|---|
| Temperatur / ° Celsius | 20,00 |
| Luftdruck / hPa | 1013,25 |
| Absolute Brechzahl von Luft | 1,000273 bei 0,546 μm Wellenlänge |

Brechzahlen relativ zur Brechzahl von Luft bei Systemtemperatur und Luftdruck.
Wellenlängen gemessen in Luft bei Systemtemperatur und Luftdruck.
Auswahlkriterium: Brechzahldifferenz kleiner gleich 0,02.

| Fläche | Glas | Temp. | Druck / 1013,25 hPa | 0,479 μm | 0,546 μm | 0,656 μm |
|---|---|---|---|---|---|---|
| 0 | | 20,00 | 1,00 | 1,00000000 | 1,00000000 | 1,00000000 |
| 1 | N-BALF4 | 20,00 | 1,00 | 1,58779242 | 1,58212172 | 1,57632234 |
| 2 | N-KZFS4 | 20,00 | 1,00 | 1,62393461 | 1,61663828 | 1,60923101 |
| 3 | NSSK8 | 20,00 | 1,00 | 1,62724749 | 1,62067643 | 1,61402316 |
| 4 | | 20,00 | 1,00 | 1,00000000 | 1,00000000 | 1,00000000 |
| 5 | | 20,00 | 1,00 | 1,00000000 | 1,00000000 | 1,00000000 |

| Thermische Ausdehnungskoeffizienten | | |
|---|---|---|
| Linse | Glas | TAK in m/m *10E-6 |
| 1 | N-BALF4 | 6,52000000 |
| 2 | N-KZFS4 | 7,30000000 |
| 3 | N-SSK8 | 7,21000000 |

Figur 7a zeigt die Helligkeitsverteilung des in diesem zweiten Beispiel beschriebenen erfindungsgemäßen Apochromaten d=100 mm, f' = 1000 mm, wobei wiederum die Helligkeitsverteilung einer punktförmigen Lichtquelle in der Bildebene des Apochromaten dargestellt ist. Die dargestellte quadratische Fläche hat eine Kantenlänge von 32 μm, wobei die Höhe der Verteilung ein Maß für die Intensität des Lichtes ist. Die Helligkeitsverteilung ist dabei über die Wellenlängen des sichtbaren Lichts von 479 nm bis 656 nm integriert. Die Helligkeitsverteilung hat in Figur 7a eine normierte Definitionshelligkeit von 97,4% bei optimaler Justierung. Um wiederum die relative Unempfindlichkeit des erfindungsgemäßen Apochromaten gegenüber Justierungsveränderungen darzustellen, ist in Figur 7b die Helligkeitsverteilung wie in Figur 7a gezeigt, wobei jedoch die mittlere Linse um 50 μm senkrecht zur optischen Achse verschoben und um 5 Bogenminuten zur optischen Achse verkippt worden ist. Danach hat der Apochromat in dem in Figur 7b dargestellten Zustand auch eine gut konzentrierte Helligkeitsverteilung, die eine normierte Definitionshelligkeit von 82,3% aufweist. Er ist nach wie vor beugungsbegrenzt (Beugungsbegrenzt: Definitionshelligkeit > 80%). Damit genügt dieser Apochromat auch nach einer Dejustierung immer noch höchsten Anforderungen an die Abbildungsqualität.
Demgegenüber sind in den Figuren 8a und 8b die Eigenschaften eines Apochromaten d=100 mm, f' = 1000 mm aus dem Stand der Technik gezeigt; dieser Apochromat ist in dem Artikel von Roland Christen, "Revised Triplet Design", Sky and Telecope (April 1982), Seiten 411-412 beschrieben. Dieser Apochromat hat eine Brechungsindexdifferenz zwischen den Linsen von $|\Delta n_d|$ von 0,096. Er erreicht bei optimaler Justierung wie in Figur 8a gezeigt eine normierte Definitionshelligkeit von 96,6%. Nach der Dejustierung (50 μm Verschiebung der Mittellinse gegenüber der optischen Achse und Verkippung um 5 Bogenminuten gegenüber der optischen Achse) ist die Helligkeitsverteilung nach Figur 8b deutlich aufgeweitet. Die Helligkeitsverteilung erreicht nur noch eine normierte Definitionshelligkeit von 44,7% und ist deutlich erkennbar nicht mehr beugungsbegrenzt. Daran zeigt sich, dass anders als bei dem erfindungsgemäßen Apochromaten, dessen Eigenschaften in den Figuren 7a und 7b gezeigt sind, der Apochromat nach dem Stand der Technik in den Figuren 8a und 8b keine Toleranzen gegenüber Dejustierungen aufweist, sondern bereits bei leichten Verschiebungen und Verkippungen eine erheblich verschlechtere Abbildungsqualität liefert, die in der Praxis nicht mehr akzeptabel ist.

Die Figuren 9a und 9b zeigen die Eigenschaften eines weiteren Apochromaten aus dem Stand der Technik, nämlich eines B-Objektives d=100 mm, f'=1500 mm von Carl Zeiss Jena (siehe z.B. H. Haferkorn, Optik, 1. Auflage, S. 606., Verlag Harry Deutsch, 1981.). Dieser Apochromat weist eine Brechungsindexdifferenz von $|\Delta n_d|$ von 0,529 auf. Bei optimaler Justierung erreicht der Apochromat eine konzentrierte Helligkeitsverteilung, die eine Definitionshelligkeit von 97,5% aufweist und deren Verteilungsbreite beugungsbegrenzt ist. Allerdings genügt schon eine geringe Dejustierung (Verschiebung der Mittellinse um 50$\mu$m senkrecht zur optischen Achse und Verkippung der Mittellinse um 5 Bogenminuten), um die Abbildungseigenschaften des Apochromaten drastisch zu verschlechtern, wie Figur 9b zeigt. Es ist praktisch keine konzentrierte Helligkeitsverteilung mehr zu erkennen, und es wird noch eine normierte Definitionshelligkeit von 6,9% erreicht. Damit ist dieser Apochromat aus dem Stand der Technik extrem anfällig auf die Dejustierungen. Demgegenüber zeigen die Figuren 7a und 7b, dass ein Apochromat gemäß der vorliegenden Erfindung kleine Dejustierungen ohne wesentliche Beeinträchtigung der Abbildungseigenschaften toleriert. Damit sind die Apochromaten gemäß der vorliegenden Erfindung in der Herstellung vorteilhaft, da kein so großer Aufwand bei der anfänglichen Justierung der Linsen beim Hersteller getrieben muss. Ferner toleriert der Apochromat Dejustierungen, die bei der Montage, durch Erschütterungen oder Stöße im Betrieb auftreten können.

Zur besseren Übersicht sind in der folgenden Tabelle die Bezeichnungen und Wellenlängen der Spektrallinien zusammengefasst, auf die in der vorliegenden Anmeldung häufig Bezug genommen wird.

| Fraunhofer'sche Linien | | | |
|---|---|---|---|
| Wellenlänge/nm | Symbol | Farbe | Element |
| 1013,98 | t | infrarote Quecksilberlinie | **Hg** |
| 852,11 | s | infrarote Cäsiumlinie | **Cs** |
| 706,5188 | r | rote Heliumlinie | **He** |
| 656,2725 | C | rote Wasserstofflinie | **H** |
| 643,8469 | C' | rote Cadmiumlinie | **Cd** |
| 589,2938 | D | gelbe Natriumlinie | **Na**(Mitte der Doppellinie) |
| 587,5618 | d | gelbe Heliumlinie | **He** |
| 546,0740 | e | grüne Quecksilberlinie | **Hg** |
| 486,1327 | F | blaue Wasserstofflinie | **H** |
| 479,9914 | F' | blaue Cadmiumlinie | **Cd** |
| 435,8343 | g | blaue Quecksilberlinie | **Hg** |
| 404,6561 | h | violette Quecksilberlinie | **Hg** |
| 365,0146 | i | ultraviolette Quecksilberlinie | **Hg** |

**Patentansprüche**

1. Apochromat mit wenigstens drei aufeinanderfolgenden Linsen i,j,k, wobei jedes Paar aufeinanderfolgender Linsen eine sammelnde und eine zerstreuende Linse umfasst, wobei aufeinanderfolgende Linsen dem Betrag nach gleiche, rein sphärische Krümmungsradien haben und durch ein dazwischen befindliches Fügemedium gekoppelt sind, **dadurch gekennzeichnet,**
   **dass** sämtliche Linsen aus unterschiedlichen optischen Gläsern bestehen und Linsenpaare aufeinanderfolgender Linsen i,j und j,k der optischen Glasart nach so ausgewählt sind,
   **dass** für das erste Linsenpaar i,j die Differenz der Brechungsindices $n_d$ die Bedingung $\Delta n_{ij} \leq 0,02$ erfüllt, dass die Differenz der Abbe-Zahl die Bedingung $|\Delta v e_{ij}| \geq 5,00$, und dass die Differenz der relativen Teildispersionen im

blauen Spektralbereich die Bedingung $\Delta\theta'_{gF'\,ij} \le 0{,}005$ erfüllt, wobei die Abbe-Zahl definiert ist durch $\nu e = (n_e-1) / (n_{F'} - n_{C'})$, die relative Teildispersion durch $\theta'_{gF'} = (n_g - n_{F'}) / (n_{F,} - n_{c'})$, so dass die Differenz der Abbe-Zahl definiert ist durch

$$|\Delta\nu e_{ij}| = |\ (n_{ei})/(n_{F'i} - n_{C'i}) - (n_{ej}/(n_{F'j} - n_{C'j})\ |$$

und die Differenz der Teildispersion zwischen zwei Linsen i und j definiert ist durch

$$\Delta\theta'_{gF'\,ij} = ((n_{gi} - n_{F'i})/(n_{F'i} - n_{C'i})) - ((n_{gj} - n_{F'j})/(n_{F'j} - n_{C'j})),$$

und

**dass** für das zweite Linsenpaar j,k die Differenz der Brechungsindices $n_d$ die Bedingung $\Delta n_{jk} \le 0{,}02$ erfüllt, dass die Differenz der Abbe-Zahl die Bedingung $|\Delta\nu e_{jk}| \ge 5{,}00$, und dass die Differenz der relativen Teilsdispersionen im roten Spektralbereich die Bedingung $\Delta\theta'_{C's\,jk} \le 0{,}005$ erfüllt, wobei die Abbé-Zahl definiert ist durch $\nu e = (n_e - 1) / (n_F - n_{c'})$, die relative Teildispersion durch $\theta'_{C's} = (n_{C'}-n_s)/(n_F - n_{C'})$, so dass die Differenz der Abbe-Zahl definiert ist durch

$$|\Delta\nu e_{jk}| = |\ (n_{ej})/(n_{F'j} - n_{C'j}) - (n_{ek})/(n_{F'k} - n_{C'k})\ |$$

und die Differenz der Teildispersion definiert ist durch

$$\Delta\theta'_{C's\,jk} = ((n_{C'j} - n_{sj})/(n_{F'j} - n_{C'j})) - ((n_{C'k} - n_{sk})/(n_{F'k} - n_{C'k})),$$

und **dass** der Betrag der Differenz zwischen dem Brechungsindex $n_d$ des Fügemediums und dem Brechungsindex der an die Fügemediumschicht anschließenden Linsen maximal 0,02 beträgt.

2. Apochromat nach Anspruch 1, **dadurch gekennzeichnet, dass** eine Anordnung von drei aufeinanderfolgenden Linsen vorgesehen ist und dass die Abfolge der Linsen einer Brechkraftfolge von entweder (+) - (+) (Typ $A_1$) oder (- (+) -) (Typ $B_1$) ist.

3. Apochromat nach Anspruch 2, **dadurch gekennzeichnet, dass** bei einer Brechkraftfolge der Linsen von (+)-(+) die Linsen des Apochromaten aus flintartigen Gläsern hergestellt sind.

4. Apochromat nach Anspruch 2, **dadurch gekennzeichnet, dass** bei einer Brechkraftfolge der Linsen von (-(+)-) die Linsen aus kronartigen Gläsern hergestellt sind.

5. Verfahren zum Entwurf eines Apochromaten mit wenigstens drei aufeinanderfolgenden Linsen i,j,k, wobei jedes Paar aufeinanderfolgender Linsen eine sammelnde und eine zerstreuende Linse umfasst, wobei aufeinanderfolgende Linsen dem Betrag nach im Wesentliche gleiche, rein sphärische Krümmungsradien haben und durch ein dazwischen befindliches optisches Fügemedium gekoppelt sind, **dadurch gekennzeichnet,**
**dass** sämtliche Linsen aus unterschiedlichen optischen Gläsern ausgewählt werden,
**dass** Linsenpaare aufeinanderfolgender Linsen i,j und j,k der optischen Glasart nach so ausgewählt werden,
**dass** die Differenz der Brechungsindices $n_d$ des ersten Paars aufeinanderfolgender Linsen i,j die Bedingung $\Delta n_{ij} \le 0{,}02$ erfüllt, dass die Differenz der Abbe-Zahl zwischen zwei aufeinanderfolgenden Linsen die Bedingung $|\Delta\nu e_{ij}| \ge 5{,}00$, und dass die Differenz der relativen Teilsdispersionen im blauen Spektralbereich die Bedingung $\Delta\theta'_{gF'ij} \le 0{,}005$ erfüllt, wobei die Abbe-Zahl definiert ist durch $\nu e = (n_e - 1) / (n_{F'} - n_{c'})$, die relative Teildispersion durch $\theta'_{gF'} = (n_g - n_{F'}) / (n_{F'} - n_{c'})$, so dass die Differenz der Abbe-Zahl definiert ist durch

$$|\Delta\nu e_{ij}| = |\ (n_{ei})/(n_{F'i} - n_{c'i}) - (n_{ej}/(n_{F'j} - n_{c'j})\ |$$

und die Differenz der Teildispersion zwischen zwei Linsen i und j definiert ist durch

$$\Delta\theta'_{gF'ij}=((n_{gi} - n_{F'i})/(n_{F'i} - n_{C'i}))-((n_{gj} - n_{F'j})/(n_{F'j} - n_{C'j})),$$

und
**dass** die Differenz der Brechungsindices $n_d$ des zweiten Paars aufeinanderfolgender Linsen j,k die Bedingung $\Delta n_{jk} \leq 0,02$ erfüllt, dass die Differenz der Abbe-Zahl zwischen zwei aufeinanderfolgenden Linsen die Bedingung $|\Delta ve_{jk}| \geq 5,00$, und dass die Differenz der relativen Teildispersionen im roten Spektralbereich die Bedingung $\Delta\theta'_{C's\,jk} \leq 0,005$ erfüllt, wobei die Abbé-Zahl definiert ist durch $ve = (n_e - 1)/(n_{F'} - n_{c'})$, die relative Teildispersion durch $\theta'_{C's} = (n_{c'} - n_s)/(n_{F'} - n_{c'})$, so dass die Differenz der Abbe-Zahl definiert ist durch

$$|\Delta ve_{jk}| = |(n_{ej})/(n_{F'j} - n_{C'j}) - (n_{ek})/(n_{F'k} - n_{C'k})|$$

und die Differenz der Teildispersion zwischen zwei Linsen j und k definiert ist durch

$$\Delta\theta'_{C's\,jk}=((n_{C'j} - n_{sj})/(n_{F'j} - n_{C'j}))-((n_{C'k} - n_{sk})/(n_{F'k} - n_{C'k})),$$

und **dass** das Fügemedium derart ausgewählt wird, dass sein Brechungsindex $n_d$ von dem Brechungsindex $n_d$ der an die Fügemediumschicht angrenzenden Linsen maximal um 0,02 abweicht.

**Claims**

1. Apochromat comprising at least three successive lenses i, j, k, wherein each pair of successive lenses includes a collecting and a diverging lens, wherein successive lenses have purely spherical radii of curvature of equal absolute value, and are coupled by cement present in between, **characterized in that**
all lenses consist of different optical glasses, and that pairs of lenses of successive lenses i, j and j, k are regarding the optical glass type selected in such a manner
that for the first lens pair i, j the difference of the refractive indices $n_d$ fulfils the condition $\Delta n_{ij} \leq 0,02$, that the difference of the Abbé number fulfils the condition $|\Delta ve_{ij}| \geq 5,00$, and that the difference of the relative partial dispersions in the blue spectral range fulfils the condition $\Delta\theta'_{gF'ij} \leq 0,005$, wherein the Abbé number is defined by $ve = (n_e - 1)/(n_{F'} - n_{C'})$, wherein the relative partial dispersion is defined by $\theta'_{gF'} = (ng - n_{F'})/(n_{F'} - n_{c'})$, such that the difference of the Abbé number is defined by

$$|\Delta ve_{ij}| = |(n_{ei})/(n_{F'i} - n_{C'i}) - (n_{ej}/(n_{F'j} - n_{C'j}))|$$

and that the difference of the partial dispersion between two lenses i and j is defined by

$$\Delta\theta'_{gF'ij}=((n_{gi} - n_{F'i})/(n_{F'i} - n_{C'i}))-((n_{gj} - n_{F'j})/(n_{F'j} - n_{C'j})),$$

and
that for the second lens pair j, k the difference of the refractive indices $n_d$ fulfils the condition $\Delta n_{jk} \leq 0,02$, that the difference of the Abbé number fulfils the conditi $|\Delta ve_{jk}| \geq 5,00$, and that the difference of the relative partial dispersions in the red spectral range fulfils the condition $\Delta\theta'_{C's\,jk} \leq 0,005$, wherein the Abbé number is defined by $ve = (n_e - 1)/(n_{F'} - n_{c'})$, the relative partial dispersion is defined by $\theta'_{C's} = (n_{C'} - n_s)/(n_{F'} - n_{c'})$, such that the difference of the Abbé number is defined by

$$|\Delta ve_{jk}| = |(n_{ej})/(n_{F'j} - n_{C'j}) - (n_{ek})/(n_{F'k} - n_{C'k})|$$

and that the difference of the partial dispersion is defined by

$$\Delta\theta'_{C's\ jk}=((n_{C'j}\ -\ n_{sj})\ /\ (n_{F'j}\ -\ n_{C'j}))-((n_{C'k}\ -\ n_{sk})\ /\ (n_{F'k}\ -\ n_{C'k})),$$

and that the absolute valve of the difference of the refractive index $n_d$ of the cement and the refractive index of the lenses adjoining the cement layer is at maximum 0,02.

2. Apochromat according to claim 1, **characterized in that** an assembly of three successive lenses is provided and that the sequence of the lenses is a refractive power sequence of either (+) - (+) (type A$_1$) or (- (+) -) (type B$_1$).

3. Apochromat according to claim 2, **characterized in that** in case of a refractive power sequence of the lenses of (+)-(+) the lenses of the apochromat are made of flint type glasses.

4. Apochromat according to claim 2, **characterized in that** in case of a refractive power sequence of the lenses of (-(+)-) the lenses are made of crown type glasses.

5. Method for designing an apochromat comprising at least three successive lenses i, j, k, wherein each pair of successive lenses includes a collecting and a diverging lens, wherein successive lenses have purely spherical radii of curvature of essentially equal absolute value, and are coupled by cement present in between, **characterized in that** all lenses are selected from different optical glasses, that pairs of lenses of successive lenses i, j and j, k are regarding the optical glass type selected in such a manner
that for the first lens pair i, j the difference of the refractive indices $n_d$ fulfils the condition $\Delta n_{ij} \le 0,02$, that the difference of the Abbé number fulfils the condition $|\Delta ve_{ij}| \ge 5,00$, and that the difference of the relative partial dispersions in the blue spectral range fulfils the condition $\Delta\theta'_{gF'\ ij} \le 0,005$, wherein the Abbé number is defined by ve = ($n_e$ - 1) / ($n_{F'}$ - $n_{c'}$), wherein the relative partial dispersion is defined by $\theta'_{gF'}$ = (ng - $n_{F'}$) / ($n_{F'}$ - $n_{C'}$), such that the difference of the Abbé number is defined by

$$|\Delta ve_{ij}|\ =\ |\ (n_{ei})\ /\ (n_{F'i}\ -\ n_{C'i})\ -\ (n_{ej}/\ (n_{F'j}\ -\ n_{C'j})\ |$$

and that the difference of the partial dispersion between two lenses i and j is defined by

$$\Delta\theta'_{gF'ij}=((n_{gi}\ -\ n_{F'i})\ /\ (n_{F'i}\ -\ n_{C'i}))-((n_{gj}\ -\ n_{F'j})\ /\ (n_{F'j}\ -\ n_{C'j})),$$

and
that for the second lens pair j, k the difference of the refractive indices $n_d$ fulfils the condition $\Delta n_{jk} \le 0,02$, that the difference of the Abbe number fulfils the condition $|\Delta ve_{jk}| \ge 5,00$, and that the difference of the relative partial dispersions in the red spectral range fulfils the condition $\Delta\theta'_{C's\ jk} \le 0,005$, wherein the Abbé number is defined by ve = ($n_e$ - 1) / ($n_{F'}$ - $n_{C'}$), the relative partial dispersion is defined by $\theta'_{C's}$ = ($n_{C'}$ - $n_s$) / ($n_{F'}$-$n_{C'}$), such that the difference of the Abbé number is defined by

$$|\Delta ve_{jk}|\ =\ |\ (n_{ej})\ /\ (n_{F'j}\ -\ n_{C'j})\ -\ (n_{ek})\ /\ (n_{F'k}\ -\ n_{C'k})\ |$$

and that the difference of the partial dispersion is defined by

$$\Delta\theta'_{C's\ jk}=((n_{C'j}\ -\ n_{sj})\ /\ (n_{F'j}\ -\ n_{C'j}))-((n_{C'k}\ -\ n_{sk})\ /\ (n_{F'k}\ -\ n_{C'k})),$$

and that the cement is selected such that its refractive index $n_d$ deviates from the refractive index of the lenses adjoining the cement layer maximally by 0,02.

**Revendications**

1. Apochromat avec au moins trois lentilles successives i, j k, chaque paire de lentilles successives comprenant une lentille collectrice et une lentille de diffraction, les lentilles successives ayant les mêmes rayons de courbure purement sphériques et sont couplées par un milieu de jonction situé entre elles, **caractérisé en ce que** toutes les lentilles sont constituées de différents verres optiques et les paires de lentilles successives i, j et j, k sont sélectionnées selon le type de verre optique,

**en ce que**, pour la première paire de lentilles i, j, la différence entre les indices de réfraction $n_d$ remplisse la condition $\Delta n_{ij} \leq 0{,}02$, à ce que la différence du nombre d'Abbé remplisse la condition $|\Delta v e_{ij}| \geq 5{,}00$ et **en ce que** la différence entre les dispersions partielles relatives dans le domaine spectral bleu remplisse la condition $\Delta \theta'_{gF' \, ij} \leq 0{,}005$, le nombre d'Abbé étant défini par $v e = (n_e - 1) / (n_{F'} - n_{C'})$, la dispersion partielle relative par $\theta g_{F'} = (n_g - n_{F'}) / (n_{F'} - n_{C'})$, de façon à ce que la différence du nombre d'Abbé soit défini par :

$$|\Delta v e_{ij}| = | \, (n_{ei}) / (n_{F'i} - n_{C'i}) - (n_{ej} / (n_{F'j} - n_{C'j}) |$$

et la différence de dispersion partielle entre deux lentilles i et j soit définie par :

$\Delta \theta'_{gF'ij} = ((n_{gi} - n_{F'i}) / (n_{F'i} - n_{C'i})) - ((n_{gj} - n_{F'j}) / (n_{F'j} - n_{C'j}))$, **en ce que**, pour la deuxième paire de lentilles j, k, la différence entre les indices de réfraction $n_d$ remplisse la condition $\Delta n_{jk} \leq 0{,}02$, **en ce que** la différence du nombre d'Abbé remplisse la condition $|\Delta v e_{jk}| \geq 5{,}00$ et **en ce que** la différence entre les dispersions partielles relatives dans le domaine spectral rouge remplisse la condition $\Delta \theta'_{C's \, jk} \leq 0{,}005$, le nombre d'Abbé étant défini par $v e = (n_e - 1) / (n_{F'} - n_{C'})$, la dispersion partielle relative par $\theta'_{C's} = (n_{C'} - n_s) / (n_{F'} - n_{C'})$, de façon à ce que la différence du nombre d'Abbé soit défini par :

$$|\Delta v e_{jk}| = | \, (n_{ej}) / (n_{F'j} - n_{C'j}) - (n_{ek}) / (n_{F'k} - n_{C'k}) |$$

et la différence de dispersion partielle entre deux lentilles j et k soit définie par : $\Delta \theta'_{C's \, jk} = ((n_{C'j} - n_{sj}) / (n_{F'j} - n_{C'j})) - ((n_{C'k} - n_{sk}) / (n_{F'k} - n_{C'k}))$, et **en ce que** la différence entre l'indice de réfraction $n_d$ du milieu de jonction et l'indice de réfraction de la lentille adjacente à la couche de milieu de jonction est de 0,02 maximum.

2. Apochromat selon la revendication 1, **caractérisé en ce qu'**une disposition de trois lentilles successives est prévue et **en ce que** la suite de lentilles est une suite d'indices de réfraction (+) - (+) (type A₁) ou (- (+) -) (type B₁).

3. Apochromat selon la revendication 2, **caractérisé en ce que**, pour une suite d'indices de réfraction des lentilles de (+)-(+), les lentilles de l'apochromat sont constituées de verres de type « flint ».

4. Apochromat selon la revendication 2, **caractérisé en ce que**, pour une suite d'indices de réfraction des lentilles (-(+)-), les lentilles de l'apochromat sont constituées de verres de type « crown ».

5. Procédé de conception d'un apochromat avec au moins trois lentilles successives i, j, k, chaque paire de lentilles successives comprenant une lentille collectrice et une lentille de diffraction, les lentilles successives ayant les mêmes rayons de courbure purement sphériques et sont couplées par un milieu de jonction situé entre elles, **caractérisé en ce que** toutes les lentilles sont constituées de différents verres optiques
**en ce que** les paires de lentilles successives i, j et j, k sont sélectionnées selon le type de verre optique,
**en ce que** la différence entre les indices de réfraction $n_d$ de la première paire de lentilles successives i, j remplisse la condition $\Delta n_{ij} \leq 0{,}02$, en ce que la différence du nombre d'Abbé entre deux lentilles successives remplisse la condition $|\Delta v e_{ij}| \geq 5{,}00$ et en ce que la différence entre les dispersions partielles relatives dans le domaine spectral bleu remplisse la condition $\Delta \theta'_{gF' \, ij} \leq 0{,}005$, le nombre d'Abbé étant défini par $v e = (n_e - 1) / (n_{F'} - n_{C'})$, la dispersion partielle relative par $\theta'_{gF'} = (n_g - n_{F'}) / (n_{F'} - n_{C'})$, de façon à ce que la différence du nombre d'Abbé soit défini par :

$$|\Delta v e_{ij}| = | \, (n_{ei}) / (n_{F'i} - n_{C'i}) - (n_{ej} / (n_{F'j} - n_{C'j}) |$$

et la différence de dispersion partielle entre deux lentilles j et k soit définie par :

$$\Delta \theta'_{gF'ij} = ((n_{gi} - n_{F'i}) / (n_{F'i} - n_{C'i})) - ((n_{gj} - n_{F'j}) / (n_{F'j} - n_{C'j})) ,$$

et

**en ce que** la différence entre les indices de réfraction nd de la deuxième paire de lentilles successives j, k remplisse la condition $\Delta n_{jk} \leq 0{,}02$, en ce que la différence du nombre d'Abbé entre deux lentilles successives remplisse la condition $|\Delta v e_{jk}| \geq 5{,}00$ et en ce que la différence entre les dispersions partielles relatives dans le domaine spectral rouge remplisse la condition $\Delta \theta'_{C's\ jk} \leq 0{,}005$, le nombre d'Abbé étant défini par $ve = (n_e - 1) / (n_{F'} - n_{C'})$, la dispersion partielle relative par $\theta'_{C's} = (n_{C'} - n_s) / (n_{F'} - n_{C'})$, de façon à ce que la différence du nombre d'Abbé soit défini par :

$$|\Delta v e_{jk}| = | (n_{ej}) / (n_{F'j} - n_{C'j}) - (n_{ek}) / (n_{F'k} - n_{C'k}) |$$

et la différence de dispersion partielle entre deux lentilles j et k soit définie par :

$$\Delta \theta'_{C's\ jk} = ((n_{C'j} - n_{sj}) / (n_{F'j} - n_{C'j})) - ((n_{C'k} - n_{sk}) / (n_{F'k} - n_{C'k})),$$

et **en ce que** le milieu de jonction est choisi de façon à ce que son indice de réfraction $n_d$ et l'indice de réfraction $n_d$ des lentilles adjacentes à la couche de milieu de jonction présentent un écart de 0,02 maximum.

Fig.1

Fig. 2b

Fig. 2a

0.8926

0.4463

0.0000

Fig. 2d

0.9937

0.4968

0.0000

Fig. 2c

Fig. 3b

Fig. 3a

Fig. 3d

Fig. 3c

Fig. 4a

Fig. 4b

Fig. 4c

Fig. 4d

Fig. 5a  Fig. 5b  Fig. 5c  Fig. 5d

Medium 3

Medium 1

Medium 5

Medium 2   Medium 4

Fig. 6

Fig. 7a

Fig. 7b

Fig. 7c

Fig. 7d

Fig. 8a

Fig. 8b

Fig. 8c

Fig. 8d

EP 2 652 540 B1

Fig. 9b

Fig. 9a

Fig. 9d

Fig. 9c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DD 241142 A1
- DE 4310660
- DE 4310660 A1


**In der Beschreibung aufgeführte Nicht-Patentliteratur**

- **ROLAND CHRISTEN.** Revised Trioplet Design. Sky and Telescope, April 1982, 411-412
- **ROLAND CHRISTEN.** Revised Triplet Design. Sky and Telecope, April 1982, 411-412
- **H. HAFERKORN.** Optik. Verlag Harry Deutsch, 1981